# EUROPÄISCHE PATENTSCHRIFT

(11) **EP 1 768 861 B1**
(45) Veröffentlichungstag und Bekanntmachung des Hinweises auf die Patenterteilung: **14.09.2011**
(21) Anmeldenummer: 05763157.4
(22) Anmeldetag: 29.06.2005
(51) Int. Cl.: B60G 3/26

(54) **HINTERACHSE EINES ZWEISPURIGEN KRAFTFAHRZEUGS MIT EINZELRADAUFHÄNGUNG**
REAR AXLE OF A TWO-TRACK MOTOR VEHICLE COMPRISING AN INDIVIDUAL WHEEL SUSPENSION
ESSIEU ARRIERE D'UN VEHICULE AUTOMOBILE A DEUX ESSIEUX POURVU D'UNE SUSPENSION A ROUES INDEPENDANTES

(30) Priorität: 21.07.2004 DE 102004035320
(43) Veröffentlichungstag der Anmeldung: 04.04.2007
(73) Patentinhaber: Bayerische Motoren Werke Aktiengesellschaft, 80809 München (DE)
(72) Erfinder: SEETHALER, Ludwig, Newbury Park, CA 91320 (US); STENZENBERGER, Alfred, 86681 Fünfstetten (DE); EILERS, Jan, 82343 Pöcking (DE); TRZASKA, Klaus, 86316 Friedberg (DE)
(86) Internationale Anmeldenummer: PCT/EP2005/006965
(87) Internationale Veröffentlichungsnummer: WO 2006/007941

(56) Entgegenhaltungen:
- EP-A- 1 147 927
- US-A- 5 580 089
- PATENT ABSTRACTS OF JAPAN Bd. 015, Nr. 458 (M-1182), 21. November 1991 (1991-11-21) & JP 03 197222 A (ISUZU MOTORS LTD), 28. August 1991 (1991-08-28)

## Beschreibung

Die Erfindung betrifft eine Hinterachse eines zweispurigen Kraftfahrzeugs mit Einzelradaufhängung mit unteren den Radträger führenden Lenkern und einer oberen Führungsvorrichtung, die an einem in einen Bereich im wesentlichen oberhalb des Rades führenden Ausleger des Radträgers angreift. Zum technischen Umfeld wird neben der gattungsbildenden deutschen Patentanmeldung DE 103 55 198 A auf die DE 199 03 435 A1 sowie auf die DE 195 24 106 A1 verwiesen.

Bei Kraftfahrzeugen mit gehobenen Ansprüchen an Fahrdynamik und Fahrkomfort haben sich Doppelquerlenker-Achsen und deren Varianten durchgesetzt, da sie für die kinematische und elastokinematische Feinabstimmung die besten Voraussetzungen bieten. An Hinterachsen ist dabei üblicherweise eine Tragfederanordnung und Dämpferanordnung neben dem Rade realisiert, entweder vom Radträger direkt an den Fahrzeug-Aufbau oder von einem Querlenker an den Aufbau oder auch einen sog. Hinterachsträger, der dann seinerseits zur akustischen Entkopplung und zur Erzielung einer guten Längsfederung über großvolumige Hinterachsträger-Gummilager mit dem Fzg.-Aufbau verbunden ist. Bei diesen üblichen Hinterachsgestaltungen steht das sog. Federbein relativ hoch neben dem Reifenhüllgebirge und beeinträchtigt somit die maximale Durchladebreite des in diesem Bereich im Fzg.-Aufbau vorgesehenen Kofferraums erheblich.

Um mehr Innenraum (bspw. Durchladebreite im Kofferraum) an einem Kraftfahrzeug im Bereich der Hinterachse zu schaffen, kann grundsätzlich eine Radaufhängung mit einem sog. Ausleger des Radträgers geschaffen werden, der sich in einen Bereich im wesentlichen oberhalb des Rades erstreckt und an dem eine obere Führungsvorrichtung für das Rad angreift. Beim Stand der Technik nach der eingangs genannten DE 195 24 106 A1 ist diese obere Führungsvorrichtung als Blattfeder ausgebildet und übernimmt somit zugleich die Funktion der Tragfeder zwischen der Fzg.-Karosserie und dem Rad, jedoch kann diese bekannte Anordnung hohen Ansprüchen an Federungskomfort, Fahrkomfort und Fahrdynamik nicht genügen. In der deutschen Patentanmeldung DE 103 55 198 A ist die Tragfeder als Schraubenfeder oder Luftfeder ausgebildet, über den sog. Ausleger des Radträgers annähernd über der Radmitte angeordnet und dieser Ausleger über ein oder zwei obere Querlenker, die sich im wesentlichen in Fzg.-Querrichtung erstrecken, geführt.

Hiermit soll nun eine weitere Hinterachse nach dem Oberbegriff des Anspruchs 1 aufgezeigt werden, die den geschilderten Anforderungen bestmöglich gerecht wird.
Die Lösung dieser Aufgabe ist dadurch gekennzeichnet, dass die obere Führungsvorrichtung durch eine körperliche Führungsbahn mit einem längs derer verschiebbaren Führungselement gebildet ist. Vorteilhafte Aus- und Weiterbildungen sind Inhalt der Unteransprüche.

In der Erkenntnis, dass obere Querlenker den für das Innenraumangebot verfügbaren Bauraum zwischen den Rädern einschränken und daher möglichst kurze Querlenker vorzuziehen sind, die jedoch im Hinblick auf eine Realisierung der geforderten kinematischen und elastokinematischen Eigenschaften der Radaufhängung eine gewisse Mindestlänge nicht unterschreiten sollten, wird nun vorgeschlagen, die sog. obere Führungsvorrichtung in Form einer Querlenkern kinematisch gleichwertigen, körperlichen Führungsbahn auszubilden, d.h. nicht in Form einer virtuellen, durch Querlenker definierten Führungsbahn, sondern in Form einer mechanischen Führungsbahn, längs derer ein sog. Führungselement geeignet geführt ist. Dabei kann das Führungselement direkt oder indirekt am Ausleger des Radträgers befestigt sein bzw. sich an diesem abstützen, während die "mechanische", körperlich vorgesehene Führungsbahn direkt oder indirekt an der Karosserie bzw. am Aufbau des Kraftfahrzeugs befestigt sein bzw. sich an dieser abstützen kann. Selbstverständlich ist auch eine kinematische Umkehr hierzu möglich.

Die sog. Führungsgeometrie der Führungsbahn (in Zusammenwirken mit dem Führungselement) kann sich dabei an den jeweiligen kinematischen Erfordernissen orientieren. Im einfachsten Fall mag eine Linearführung entlang einer geraden Linie ausreichend sein, bei höheren kinematischen Ansprüchen ist jedoch auch eine gebogene Führungsbahn mit konstantem Radius und im allgemeinen Fall eine räumlich (also um drei Achsen) gekrümmte Bahn mit veränderlichen Radien möglich. Dabei kann die körperliche Führungsbahn als entsprechend geformter Stab mit bspw. kreisförmigem Querschnitt ausgebildet sein, auf dem ein bspw. hülsenförmiges Führungselement längs der Stab-Achse verschiebbar geführt ist. Auch in Abhängigkeit von der jeweiligen Führungsgeometrie sind dabei verschiedene Arten der Lagerung des Führungselementes auf der Führungsbahn möglich. Neben hülsenförmigen Gleitlagern oder handelsüblichen Linearlagerungen im einfachsten Fall kommen Gleit- oder Wälzlager oder auch aufwändigere Kugelumlaufmechanismen für räumlich gekrümmte Führungsbahnen in Frage. Bei Bedarf ist auch eine Kombination mit einem Kugelgelenk oder einem Gummilager möglich, welches den kardanischen Freiheitsgrad realisiert. Ein Gummilager kann im übrigen auch weitere Funktionen wie akustische Entkopplung und Längsfederung übernehmen.

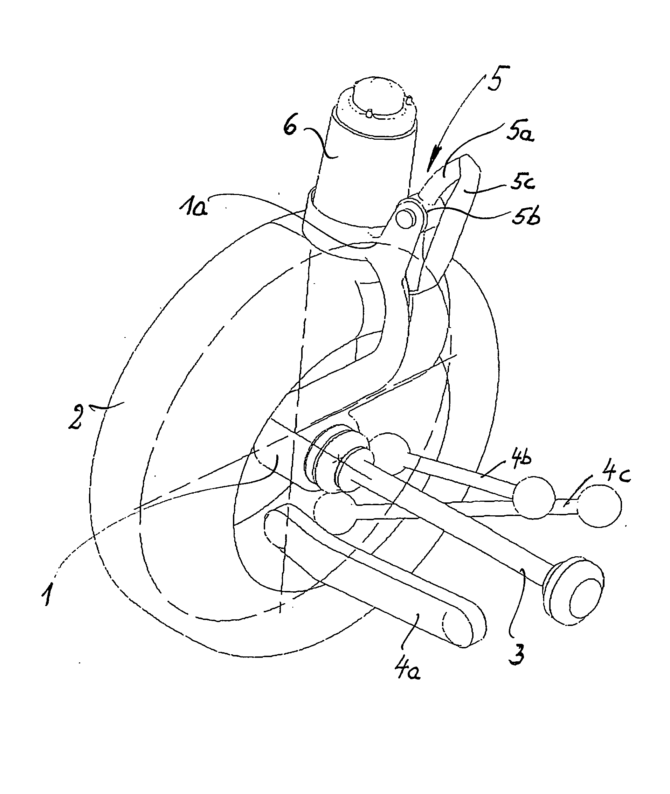

Ehe auf weitere vorteilhafte Ausgestaltungen einer erfindungsgemäßen Hinterachse eingegangen wird, sei zunächst auf die beigefügte einzige Figur verwiesen, die ein linkes Hinterrad eines Kraftfahrzeugs mit einer erfindungsgemäßen Einzelradaufhängung in räumlicher vereinfachter Darstellung zeigt.

Dabei ist mit der Bezugsziffer 1 ein Radträger und mit der Bezugsziffer 2 ein auf diesem befestigtes Rad gekennzeichnet. Eine Abtriebswelle 3 dient zum Antrieb dieses Rades 2, das bzw. dessen Radträger 1 einerseits durch drei untere Lenker 4a, 4b, 4c, von denen sich zwei zumindest im wesentlichen in Fzg.-Querrichtung erstrecken, geführt ist. Eine weitere Führung dieses Radträgers 1 erfolgt in einer sog. oberen Führungsvorrichtung 5, die an einem Ausleger 1a des Radträgers, der in einen Bereich im wesentlichen oberhalb des Rades 2 hineinragt, angreift. An seinem dem Radträger 1 abgewandten Ende ist dieser Ausleger 1a mit einer Aufnahme für ein Tragfederelement 6 versehen, über welches der nicht gezeigte Fzg.-Aufbau bzw. die Karosserie des Kraftfahrzeugs letztlich auf dem Rad 2 abgestützt ist. Der Ausleger 1a sowie dessen Aufnahme für das Tragfederelement 6 sind dabei derart geformt, dass sich das Tragfederelement 6 im wesentlichen direkt über der Radmitte oberhalb des Rades 2 befindet.

Die obere Führungsvorrichtung 5 besteht aus einer körperlich ausgeführten Führungsbahn 5a, auf der ein hier hülsenförmiges sog. Führungselement 5b längsverschiebbar geführt ist. Während das Führungselement 5b am Ausleger 1a des Radträgers 1 in einem Bereich oberhalb des Rades 2 befestigt ist, ist die Führungsbahn 5a über einen an deren Enden angreifenden Haltebügel 5c auf nicht näher dargestellte Weise an der (ebenfalls nicht dargestellten) Karosserie des Kraftfahrzeugs befestigt.

Obwohl bei diesem vereinfacht dargestellten Ausführungsbeispiel das Tragfederelement 6 am sog. Ausleger 1a oberhalb des Rades 2 befestigt ist, ist die vorliegende Erfindung nicht auf eine solche Anordnung des Tragfederelementes beschränkt. Vielmehr ist auch eine Ausführungsform mit untenliegender Tragfeder vorstellbar, bei welcher dann der radträgerseitige Ausleger 1 a zur obenliegenden Führungsbahn 5a von den Federkräften (und üblicherweise dann auch von den Dämpferkräften) entlastet ist. Damit lässt sich der Ausleger 1a entsprechend kostengünstig und gewichtsgünstig dimensionieren. Auch für ein frontgetriebenes Kraftfahrzeug ohne Abtriebswelle 3 kann bspw. durch eine querlenkerfeste Anordnung (d.h. auf einem der Querlenker 4a, 4b) der Tragfeder, ggf. auch des Dämpfers, immer noch eine kompakte Bauweise und ein großes Innenraumangebot realisiert werden.

Im weiteren werden - ohne Bezugnahme auf das figürlich dargestellte Ausführungsbeispiel - noch einige vorteilhafte Weiterbildungen beschrieben.

So kann - quasi als ein Zwischenschritt auf dem Weg von einer linearen zur räumlichen Führung - in der Führungsvorrichtung die lineare Führungsbahn mit einer spiralförmigen Nut oder dgl. - hier Verstellnut genannt - versehen sein, mit der das hülsenförmige Führungselement derart (bspw. über eine Passfeder) zusammenwirkt, dass dieses Führungselement während einer Federungsbewegung, d.h. bei Bewegung entlang der Führungsbahn - zusätzlich in eine Rotationsbewegung um die Hochachse versetzt wird. Diese Rotation oder eine andere zusätzliche Bewegung kann dazu ausgenutzt werden, über eine Exzentrizität zwischen der Achse der Führungsbahn und der Achse des Führungselementes eine Querbewegung des Radträgers zu erzeugen, die einem Zuwachs an negativem Sturz beim Einfedern entspricht. Damit wird der Radträger räumlich gekrümmt geführt, obwohl die Führungsbahn selbst keine Krümmung aufweist, was sich vorteilhaft auf Fertigung und Lagerung an bzw. in der sog. oberen Führungsvorrichtung auswirkt.

Hilfreich für eine Realisierung einer räumlichen Führung ist im übrigen das vergleichsweise niedrige Kraftniveau, das in dieser Entfernung vom Radaufstandspunkt herrscht und zu erheblich geringeren Lagerkräften als in der unteren Querlenkerebene führt. Dabei ist eine Anordnung der Führungsbahn mittig über dem Rad möglich, aber auch in Fahrzeug-Längsrichtung versetzt vor oder hinter dem ggf. im wesentlichen oberhalb der Radmitte positionierten Tragfederelement, das als Stahl-Schraubenfeder oder Luftfeder ausgeführt sein kann. Für eine mehr oder weniger konzentrische Anordnung von Tragfederelement und Führungsbahn ist es von Vorteil, eine Luftfeder vorzusehen, die dann vorteilhafterweise gleichzeitig eine Schutz- und Dichtungsfunktion für die beweglichen Elemente der oberen Führungsvorrichtung darstellen kann, falls diese innerhalb der Luftfeder bzw. innerhalb von deren Balg angeordnet sind. Der obere Federteller und die karosserieseitige Festlegung der Führungsbahn kann dann als ein integrales Bauteil ausgeführt werden.

Eine sehr kompakte Bauweise wird erreicht, wenn nicht nur das Tragfederelement und die sog. obere Führungsvorrichtung konzentrisch angeordnet sind, sondern auch noch die Dämpfungsfunktion innerhalb des Bauraums des als Luftfeder ausgeführten Tragfederelements realisiert ist. Hierfür kann das Luftfedervolumen durch eine Membran geteilt und diese Membran mit Ventilen ausgestattet sein, so dass bei Federungsbewegungen die Drosselverluste der durchströmenden Luft an den Ventilen als Dämpfung nutzbar sind. Für einen maximal nutzbaren Innenraum steht damit oberhalb der Abtriebswelle bis zum Radhüllgebirge kein Bauteil mehr im Wege, nämlich kein Lenker, keine Tragfeder und kein Dämpfer.

Auch wegen des geringen Kraftniveaus und der kompakten Bauweise lässt sich an einer erfindungsgemäßen Hinterachse gut eine aktive Sturzverstellung in Kombination mit der vorgeschlagenen Führungsbahn realisieren. In diesem Falle kann die Führungsbahn nicht unmittelbar karosseriefest, sondern im wesentlichen in Fzg.-Querrichtung durch bspw. elektrische oder hydraulische Aktuatoren linear verschiebbar ausgeführt sein.

Grundsätzlich ermöglicht also die vorgeschlagene Ausführung einer insbesondere angetriebenen Radaufhängung die Erfüllung hoher Ansprüche an Fahrkomfort und Fahrdynamik in Verbindung mit einem überdurchschnittlich großen Innenraumangebot zwischen den Hinterrädern. Dabei kann durch die räumliche Führung des Radträgers an einer Führungsbahn das hohe kinematische und elastokinematische Potential einer Doppelquerlenker- bzw. Fünflenkerachse erreicht werden. Durch die Anordnung der Tragfeder zwischen Radträger und Karosserie bleiben die Hinterachsträgerlager frei von Vorlasten, was sich günstig auf das akustische Übertragungsverhalten auswirkt. Dabei wird je nach Ausführung erreicht, dass im kritischen Bauraum oberhalb der Abtriebswelle und neben den Radhüllgebirgen kein Bauteil der Radführung mehr angeordnet ist und den nutzbaren Innenraum einschränkt. Außerdem werden günstige Voraussetzungen geschaffen, um eine aktive Sturzverstellung zu realisieren, ohne das nutzbare Innenraumvolumen einzuschränken, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Hinterachse eines zweispurigen Kraftfahrzeugs mit Einzelradaufhängung mit unteren den Radträger (1) führenden Lenkern (4a, 4b, 4c) und einer oberen Führungsvorrichtung (5) für den Radträger, die an einem in einen Bereich oberhalb des Rades (2) führenden Ausleger (1 a) des Radträgers (1) angreift, wobei am Ausleger (1 a) ein Tragfederelement (6) für die Fahrzeug-Karosserie im wesentlichen oberhalb der Radmitte abgestützt ist,
**dadurch gekennzeichnet, dass** die obere Führungsvorrichtung (5) durch eine körperliche Führungsbahn (5a) mit einem längs derer verschiebbaren Führungselement (5b) gebildet ist, wobei die Führungsbahn entweder gekrümmt ausgeführt ist oder eine geradlinig verlaufende Führungsbahn mit einer Verstellnut oder dgl. versehen ist, über die dem Führungselement (5b) bei einer Bewegung entlang der Führungsbahn (5a) zusätzlich eine Drehbewegung um die Führungsbahn aufgeprägt werden kann.

2. Hinterachse nach Anspruch 1,
**dadurch gekennzeichnet, dass** die Führungsbahn (5a) direkt oder indirekt an der Karosserie des Kraftfahrzeugs und das Führungselement (5b) direkt oder indirekt am Ausleger (1 a) des Radträgers (1) befestigt ist.

3. Hinterachse nach Anspruch 1,
**dadurch gekennzeichnet, dass** die Führungsbahn (5a) direkt oder indirekt am Ausleger (1a) des Radträgers (1) und das Führungselement (5b) direkt oder indirekt an der Karosserie des Kraftfahrzeugs befestigt ist.

4. Hinterachse nach einem der vorangegangenen Ansprüche,
**dadurch gekennzeichnet, dass** zwischen dem Führungselement (5b) und der körperlichen Führungsbahn (5a) eine Gleitlagerung oder Wälzlagerung, ggf. in Kombination mit einem Kugelgelenk oder Gummilager, vorgesehen ist.

5. Hinterachse nach einem der vorangegangenen Ansprüche,
**dadurch gekennzeichnet, dass** die Führungsbahn mit dem Führungselement innerhalb des als Luftfeder ausgebildeten Tragfederelements angeordnet ist.

6. Hinterachse nach einem der vorangegangenen Ansprüche,
**dadurch gekennzeichnet, dass** die Funktion eines Dämpfers von dem als Luftfeder ausgebildeten Tragfederelement übernommen wird, das hierzu geeignet ausgebildet ist, mit einer Unterteilung des Luftfedervolumens in zwei Volumina, die über Dämpfungsventile miteinander in Verbindung stehen.

7. Hinterachse nach einem der vorangegangenen Ansprüche,
**dadurch gekennzeichnet, dass** das der Fahrzeug-Karosserie zugeordnete Element der Führungsvorrichtung gegenüber der Karosserie verstellbar an dieser abgestützt ist.

## Claims

1. A rear axle of a two-track motor vehicle with an independent wheel suspension with lower suspension links (4a, 4b, 4c) guiding the wheel carrier (1) and an upper guide device (5) for the wheel carrier, which engages on an extension arm (1 a) of the wheel carrier (1) guiding in a region above the wheel (2), a carrier spring element (6) for the body of the vehicle being supported on the extension arm (1 a) substantially above the wheel centre, **characterised in that** the upper guide device (5) is formed by a physical guiding path (5a) with a guide element (5b), which can be displaced along the latter, the guiding path either being curved, or a linearly extending guide path with an adjusting groove or the like being provided, by means of which a rotary movement about the guiding path can additionally be imposed on the guide element (5b) upon a movement along the guiding path (5a).

2. A rear axle according to claim 1, **characterised in that** the guiding path (5a) is fastened directly or indirectly to the body of the motor vehicle and the guide element (5b) is fastened directly or indirectly to the extension arm (1 a) of the wheel carrier (1).

3. A rear axle according to claim 1, **characterised in that** the guiding path (5a) is fastened directly or indirectly to the extension arm (1 a) of the wheel carrier (1) and the guide element (5b) is fastened directly or indirectly to the body of the motor vehicle.

4. A rear axle according to any one of the preceding claims, **characterised in that** a sliding bearing or roller bearing, optionally in combination with a ball and socket joint or rubber bearing, is provided between the guide element (5b) and the physical guiding path (5a).

5. A rear axle according to any one of the preceding claims, **characterised in that** the guiding path with the guide element is arranged within the carrier spring element configured as a pneumatic spring.

6. A rear axle according to any one of the preceding claims, **characterised in that** the function of a damper is assumed by the carrier spring element, which is configured as a pneumatic spring and is configured to be suitable for this purpose, with a division of the pneumatic spring volume into two volumes, which are connected to one another by damping valves.

7. A rear axle according to any one of the preceding claims, **characterised in that** the element, which is associated with the body of the vehicle, of the guide device is supported on the body so as to be adjustable relative thereto.

## Revendications

1. Essieu arrière d'un véhicule automobile à double écartement comportant des suspensions individuelles de roue avec des bras (4a, 4b, 4c) inférieurs guidant la fusée (1) et un dispositif de guidage supérieur (5) pour la fusée, ce dispositif coopérant avec un bras (1a) de la fusée (1) guidant la zone au-dessus de la roue (2),
- le bras (1a) ayant un élément de support à ressort (6) pour la carrosserie du véhicule qui s'appuie principalement au-dessus du milieu de la roue,
essieu arrière **caractérisé en ce que**
- le dispositif de guidage supérieur (5) est formé par un chemin de guidage (5a) matérialisé, ayant un élément de guidage (5b) coulissant longitudinalement selon ce chemin,
- le chemin de guidage étant courbe, ou droit, avec un écrou de réglage ou un moyen analogue qui permet d'imprimer à l'élément de guidage (5b) lors de son mouvement le long du chemin de guidage (5a) en plus un mouvement de rotation autour du chemin de guidage.

2. Essieu arrière selon la revendication 1,
**caractérisé en ce que**
le chemin de guidage (5a) est fixé directement ou indirectement à la carrosserie du véhicule automobile et l'élément de guidage (5b) est fixé directement ou indirectement au bras (1a) de la fusée (1).

3. Essieu arrière selon la revendication 1,
**caractérisé en ce que**
le chemin de guidage (5a) est fixé directement ou indirectement au bras (1a) du support de roue (1) et l'élément de guidage (5b) est fixé directement ou indirectement à la carrosserie du véhicule automobile.

4. Essieu arrière selon l'une des revendications précédentes,
**caractérisé par**
un palier lisse ou un palier à roulement, le cas échéant en combinaison avec une articulation à rotule ou un palier en caoutchouc, entre l'élément de guidage (5b) et le chemin de guidage matérialisé (5a).

5. Essieu arrière selon l'une des revendications précédentes,
**caractérisé en ce que**
le chemin de guidage est monté avec l'élément de guidage à l'intérieur de l'élément de support réalisé en forme de ressort à air.

6. Essieu arrière selon l'une des revendications précédentes,
**caractérisé en ce que**
la fonction d'amortisseur est assurée par l'élément de support en forme de ressort à air réalisé de manière appropriée avec subdivision du volume de ressort à air en deux parties de volume communiquant par des soupapes d'amortissement.

7. Essieu arrière selon l'une des revendications précédentes,
**caractérisé en ce que**
l'élément du dispositif de guidage associé à la carrosserie du véhicule est appuyé de manière réglable à la carrosserie du véhicule.
